(19) Europäisches Patentamt
European Patent Office
Office européen des brevets

(11) Veröffentlichungsnummer: **0 316 737 B1**

(12) **EUROPÄISCHE PATENTSCHRIFT**

(45) Veröffentlichungstag der Patentschrift: **29.09.93**

(51) Int. Cl.$^5$: **C08K 5/53**, C08J 9/00, C08L 75/04, C08L 79/04

(21) Anmeldenummer: **88118637.3**

(22) Anmeldetag: **09.11.88**

# (54) Verwendung von Ethan-(1,2)-diphosphonsäure-tetramethylester (TMEDP) bei der Herstellung von Kunststoffen auf Isocyanatbasis.

(30) Priorität: **17.11.87 DE 3738944**

(43) Veröffentlichungstag der Anmeldung:
**24.05.89 Patentblatt 89/21**

(45) Bekanntmachung des Hinweises auf die Patenterteilung:
**29.09.93 Patentblatt 93/39**

(84) Benannte Vertragsstaaten:
**BE CH DE GB LI**

(56) Entgegenhaltungen:
**US-A- 3 664 975**

(73) Patentinhaber: **BAYER AG**
**D-51368 Leverkusen(DE)**

(72) Erfinder: **Wiedermann, Rolf, Dr.**
**Wiesenstrasse 18**
**D-5068 Odenthal(DE)**
Erfinder: **Adam, Norbert, Dr.**
**Semmelweisstrasse 79**
**D-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 316 737 B1

## Beschreibung

Der Einsatz phosphorhaltiger Flammschutzmittel bei der Herstellung von Kunststoffen auf Isocyanatbasis, vorzugsweise von Polyurethan- und Polyisocyanurat-Kunststoffen einschließlich Schaumstoffen, ist seit langem üblich. Gängige Flammschutzmittel sind Trichlorethylphosphat und Dimethylmethanphosphonat (DMMP).

Das erstgenannte Flammschutzmittel führt im Brandfall zu einer Belastung mit Halogen.

Das zweitgenannte Flammschutzmittel enthält zwar kein Halogen, wandert infolge des geringen Molekulargewichtes aber leicht aus Polymeren aus.

Aufgabe der Erfindung war, ein Flammschutzmittel zu finden, das sowohl frei von Halogen ist als auch eine geringe Auswanderungstendenz aus Kunststoffen auf Isocyanatbasis aufweist.

Überraschenderweise wurde nun gefunden, daß Ethan-(1,2)-diphosphonsäure-tetramethylester neben der Halogenfreiheit und dem Flammschutzeffekt eine geringe Tendenz zum Auswandern aus Kunststoffen auf Isocyanatbasis aufweist.

Gegenstand der Erfindung ist die Verwendung von Ethan-(1,2)-diphosphonsäure-tetramethylester der Formel

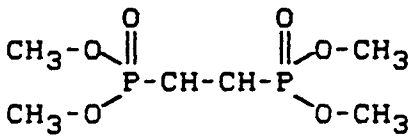

bei der Herstellung von Kunststoffen aus Isocyanatbasis.

Die Herstellung dieser Verbindung ist an sich bekannt. Erfindungsgemäß ist bevorzugt, daß Ethan-(1,2)-diphosphonsäure-tetramethylester in einer Menge von 1 bis 20 Gew.-%, insbesondere in einer Menge von 2 bis 10 Gew.-%, bezogen auf den Kunststoff auf Isocyanatbasis, eingesetzt wird.

Die Herstellung von Kunststoffen auf Isocyanatbasis ist an sich bekannt und z.B. in den deutschen Offenlegungsschriften 1 694 142, 1 694 215 und 1 720 768 sowie im Kunststoff-Handbuch Band VII, Polyurethane, herausgegeben von Vieweg und Höchtlen, Carl Hanser Verlag München 1966 sowie in der Neuauflage dieses Buches, herausgegeben von G. Oertel, Carl Hanser Verlag München, Wien 1983, beschrieben.

Es handelt sich dabei vorwiegend um Urethan- und/oder Isocyanurat- und/oder Allophanat- und/oder Uretdion- und/oder Harnstoff- und/oder Carbodiimidgruppen aufweisende Kunststoffe. Die erfindungsgemäße Verwendung erfolgt vorzugsweise bei der Herstellung von Polyurethan-und Polyisocyanuratkunststoffen, insbesondere Schaumstoffen.

Für die Herstellung der Kunststoffe aus Isocyanatbasis werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$Q(NCO)_n$

in der

n = 2-4, vorzugsweise 2-3,

und

Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Ausgangskomponenten sind ferner Verbindungen mit mindestens zwei gegenüber Isocyanaten reaktionsfähigen Wasserstoffatomen von einem Molekulargewicht in der Regel von 400-10.000. Hierunter versteht man neben Aminogruppen, Thiogruppen oder Carboxylgruppen ausweisende Verbindungen vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden.

3. Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.

4. Gegebenenfalls werden Hilfs- und Zusatzmittel mitverwendet wie

a) Wasser und/oder leicht flüchtige organische Substanzen als Treibmittel,

b) zusätzliche Katalysatoren der an sich bekannten Art in Mengen von bis zu 10 Gew.-%, bezogen auf die Mengen an Komponente 2,

c) oberflächenaktive Zusatzstoffe, wie Emulgatoren und Schaumstabilisatoren,

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und weitere Flammschutzmittel der an sich bekannten Art, z.B. Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des Verfahrens zur Herstellung von Polyurethankunststoffen:

Die Reaktionskomponenten werden nach den an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Erfindungsgemäß lassen sich auch kalthärtende Schaumstoffe herstellen (vgl. GB-PS 11 62 517, DE-OS 21 53 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. als Dämmplatten für die Dachisolierung Anwendung.

## Beispiele

1. Die Wirkung als Flammschutzmittel wird hier durch den Vergleich mit den hochwirksamen Standard-Flammschutzmittel Dimethylmethanphosphonat (DMMP) verdeutlicht. Die Wirkung ist nur unwesentlich geringer. Nachfolgend die Rezepturen und Ergebnisse der Brandversuche im Vergleich.

| | erfindungsgemäßes Beispiel | Vergleichsbeispiel |
|---|---|---|
| Sucrose/Propylenglykol-Propylenoxid-Polyether, OHZ 480 | 60 GT | 60 GT |
| Propylenglykol | 3 GT | 3 GT |
| Tris-(β-chlorisopropyl)-phosphat | 20 | 20 GT |
| TMEDP | 5 GT | - |
| DMMP | - | 5 GT |
| Glycerin | 4 GT | 4 GT |
| Wasser | 1 GT | 1 GT |
| Silikonstabilisator | 1,8 GT | 1,8 GT |
| Triethylamin | 1,2 GT | 1,2 GT |
| Trichlorfluormethan | 35 GT | 35 GT |
| Polymeres Diphenylmethan-diisocyanat (Desmodur 44 V 20) | 135 GT | 135 GT |
| Brandklasse (DIN 4102) | | |
| Klasse | B 3 | B 3 |
| Flammenhöhe, Durschschnitt (mm) | 150 | 140 |
| Zerstörte Probenlänge (mm) | 96 | 88 |

GT = Gewichtsteile

2. In einer Weichschaumrezeptur, Basis Toluylendiisocyanat (Desmodur T 80), wurde TMEDP verschäumt. Der erhaltene, offenzellige Schaumstoff wurde auf seinen Gehalt an Phosphor untersucht und zwar direkt nach der Herstellung und nach 7 Tagen Lagerung bei 100 °C. Unter diesen verschärften Bedingungen kann vergleichend geprüft werden, welche (analytisch nachweisbaren) Stoffe aus Polyurethan-Schaumstoffen auswandern. Als Vergleichsmaterial diente das Standard-Flammschutzmittel

DMMP. In der nachfolgenden Tabelle sind die Ergebnisse zusammengestellt.

| Flammschutzmittel | Nullwert | nach 1 W. 100 °C |
|---|---|---|
| DMMP | 0,7 % P | nicht nachweisbar |
| TMEDP | 2,1 % P | 1 % P |

Wie den Daten zu entnehmen ist, wandert DMMP sehr rasch aus, nach einer Woche ist es nicht mehr nachweisbar. TMEDP hingegen ist nach dieser Lagerung noch etwa zur Hälfte vorhanden, zeigt also eine deutlich geringere Tendenz zum Auswandern.

## Patentansprüche

1. Verwendung von Ethan-(1,2)-diphosphonsäure-tetramethylester bei der Herstellung von Kunststoffen auf Isocyanatbasis.

2. Verwendung gemäß Anspruch 1, dadurch gekennzeichnet, daß Ethan-(1,2)-diphosphonsäure-tetramethylester in einer Menge von 1 bis 20 Gew.-%, bezogen auf den Kunststoff auf Isocyanatbasis, eingesetzt wird.

3. Verwendung gemäß Anspruch 1 und 2, dadurch gekennzeichnet, daß Ethan-(1,2)-diphosphonsäure-tetramethylester in einer Menge von 2 bis 10 Gew.-%, bezogen auf den Kunststoff aus Isocyanatbasis, eingesetzt wird.

4. Verwendung gemäß Ansprüchen 1 bis 3 bei der Herstellung von Polyurethankunststoffen.

5. Verwendung gemäß Ansprüchen 1 bis 4 bei der Herstellung von Polyurethanschaumstoffen.

6. Verwendung gemäß Ansprüchen 1 bis 3 bei der Herstellung von Polyisocyanuratkunststoffen.

7. Verwendung gemäß Ansprüchen 1 bis 3 und 6 bei der Herstellung von Polyisocyanuratschaumstoffen.

## Claims

1. The use of ethane-(1,2)-diphosphonic acid tetramethyl ester in the production of isocyanate-based plastics.

2. The use claimed in claim 1, characterized in that ethane-(1,2)-diphosphonic acid tetramethyl ester is used in a quantity of 1 to 20% by weight, based on the isocyanate-based plastic.

3. The use claimed in claims 1 and 2, characterized in that ethane-(1,2)-diphosphonic acid tetramethyl ester is used in a quantity of 2 to 10% by weight, based on the isocyanate-based plastic.

4. The use claimed in claims 1 to 3 in the production of polyurethane plastics.

5. The use claimed in claims 1 to 4 in the production of polyurethane foams.

6. The use claimed in claims 1 to 3 in the production of polyisocyanurate plastics.

7. The use claimed in claims 1 to 3 and 6 in the production of polyisocyanurate foams.

## Revendications

1. Utilisation de l'ester tétraméthylique de l'acide éthane-(1,2)-diphosphonique pour la préparation de matières plastiques à base d'isocyanate.

2. Utilisation selon la revendication 1, caractérisée en ce que l'ester tétraméthylique de l'acide éthane-(1,2)-diphosphonique est utilisé en quantité de 1 à 20% en poids rapportée à la matière plastique à

base d'isocyanate.

3. Utilisation selon les revendications 1 et 2, caractérisée en ce que l'ester tétraméthylique de l'acide éthane-(1,2)-diphosphonique est utilisé en quantité de 2 a 10% en poids rapportée à la matière plastique à base d'isocyanate.

4. Utilisation selon les revendications 1 à 3, pour la préparation de matières plastiques à base de polyuréthane.

5. Utilisation selon les revendications 1 a 4, pour la préparation de mousse de polyuréthane.

6. Utilisation selon les revendications 1 à 3, pour la préparation de matières plastiques à base de polyisocyanurate.

7. Utilisation selon les revendications 1 à 3 et 6, pour la préparation de mousses de polyisocyanurate.